# EUROPÄISCHE PATENTSCHRIFT

(11) **EP 3 307 556 B1**
(45) Veröffentlichungstag und Bekanntmachung des Hinweises auf die Patenterteilung: **05.08.2020**
(21) Anmeldenummer: 16711277.0
(22) Anmeldetag: 22.03.2016
(51) Int. Cl.: C08L 23/22, C08L 7/00, C08K 3/04, B60C 1/00

(54) **KAUTSCHUKMISCHUNG UND FAHRZEUGREIFEN**
RUBBER MIXTURE AND VEHICLE TIRES
MÉLANGE DE CAOUTCHOUC ET PNEU DE VÉHICULE

(30) Priorität: 12.06.2015 DE 102015210840
(43) Veröffentlichungstag der Anmeldung: 18.04.2018
(73) Patentinhaber: Continental Reifen Deutschland GmbH, 30165 Hannover (DE)
(72) Erfinder: PETERS, Fabian, 30457 Hannover (DE); HERZOG, Katharina, 31177 Harsum (DE); KRAMER, Thomas, 32049 Herford (DE); MÜLLER-WILKE, Thomas, 31714 Lauenhagen (DE)
(74) Vertreter: Finger, Karsten
(86) Internationale Anmeldenummer: PCT/EP2016/056203
(87) Internationale Veröffentlichungsnummer: WO 2016/198178

(56) Entgegenhaltungen:
- EP-A1- 2 452 972
- EP-A1- 2 452 972
- EP-A1- 2 746 323
- EP-A1- 2 746 323

## Beschreibung

Die Erfindung betrifft eine schwefelvernetzbare Kautschukmischung, insbesondere für die Seitenwand von Fahrzeugreifen, und einen Fahrzeugreifen.

Insbesondere die Kautschukmischung für die Seitenwand von Fahrzeugreifen ist zweckmäßig darauf ausgelegt, einen hohe Abriebresistenz und eine hohe Ermüdungs- sowie Rissbeständigkeit im Fahrbetrieb aufzuweisen, wobei gleichzeitig ein möglichst geringer Rollwiderstand zu erzielen ist.
Die JP 2011236368 offenbart beispielsweise eine Kautschukmischung enthaltend 3 bis 40 phr eines flüssigen Harzes mit einem Erweichungspunkt von -20 bis + 20 °C, um einen guten Kompromiss in dem Konflikt aus Rollwiderstand, Rissbeständigkeit, Fahrstabilität (im Fahrzeugreifen) und Verarbeitbarkeit zu erzielen.
In der JP 2012144643 wird eine Kautschukmischung enthaltend eine Kombination aus Öl und Kohlenwasserstoffharzen offenbart, womit eine Verbesserung der Rollwiderstandsindikatoren erzielt wird.
Auch die JP 2010159376 A offenbart eine Kautschukmischung enthaltend eine Kombination aus Öl und Kohlenwasserstoffharz (Petrolharz), wobei teilweise verbesserte Rollwiderstandsindikatoren offenbart werden.
Die US 2011/030244 offenbart eine Kautschukmischung enthaltend 5 bis 30 phr eines Pflanzenöls anstelle eines aromatischen Öls in Kombination mit Zinn-funktionalisiertem SBR, wobei auch hier teilweise erhöhte Rollwiderstandsindikatoren und teilweise verbesserte Rissbeständigkeiten offenbart werden.

Der vorliegenden Erfindung liegt nun die Aufgabe zugrunde, eine schwefelvernetzbare Kautschukmischung, insbesondere für die Seitenwand von Fahrzeugreifen, bereitzustellen, die eine Verbesserung gegenüber dem Stand der Technik im Hinblick auf den Zielkonflikt aus Rollwiderstand und Reißeigenschaften aufweist.

Gelöst wird diese Aufgabe durch eine schwefelvernetzbare Kautschukmischung enthaltend:
- 10 bis 40 phr natürliches Polyisopren (NR) und 60 bis 90 phr Polybutadien (BR) und
- 15 bis 55 phr wenigstens eines Füllstoffs und
- wenigstens ein Kohlenwasserstoffharz, welches zu 25 bis 100 Gew.-% aus aromatischen Monomeren aufgebaut ist, und einen Erweichungspunkt gemäß ASTM E 28 (Ring und Ball) von 70 bis 130 °C aufweist, und
- 0 phr weitere Weichmacher.

Eine weitere Aufgabe, die der vorliegenden Erfindung zugrunde liegt, besteht darin einen Fahrzeugreifen bereitzustellen, der eine Verbesserung gegenüber dem Stand der Technik im Hinblick auf den Zielkonflikt aus Rollwiderstand und Reißeigenschaften, und insbesondere eine verbesserte strukturelle Haltbarkeit im Hinblick auf die Reißeigenschaften aufweist.
Gelöst wird die Aufgabe dadurch, dass der Fahrzeugreifen wenigstens in der Seitenwand wenigstens ein Vulkanisat wenigstens einer schwefelvernetzbaren Kautschukmischung mit oben genannten Merkmalen aufweist.
Fahrzeugreifen, die die erfindungsgemäße Kautschukmischung wenigstens in der Seitenwand enthalten, weisen eine verbesserte strukturelle Haltbarkeit im Hinblick auf die Reißeigenschaften bei gleichem oder sogar verbessertem Rollwiderstand auf.
Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Die erfindungsgemäße Kautschukmischung ist ferner auch für andere Bauteile von Fahrzeugreifen geeignet, wie z.B. insbesondere Laufstreifen, Hornprofil, sowie innere Reifenbauteile.
Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden werden die Bestandteile der erfindungsgemäßen schwefelvernetzbaren Kautschukmischung näher beschrieben. Sämtliche Ausführungen gelten auch für den erfindungsgemäßen Fahrzeugreifen, der die erfindungsgemäße Kautschukmischung wenigstens in der Seitenwand aufweist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen (Gewichtsmittel Mw des Molekulargewichts gemäß GPC von 250000 bis 5000000 g/mol) und dadurch festen Kautschuke bezogen.

Die erfindungsgemäße Kautschukmischung enthält 10 bis 40 phr natürliches Polyisopren (NR) und 60 bis 90 phr Polybutadien (BR) Sämtliche enthaltenen Dienkautschuke weisen ein Gewichtsmittel Mw des Molekulargewichts gemäß GPC von 250000 bis 5000000 g/mol auf.

Gemäß der Erfindung enthält die Kautschukmischung natürliches Polyisopren (NR) und Polybutadien und zwar 10 bis 40 phr NR und 60 bis 90 phr BR, besonders bevorzugt 25 bis 40 phr NR und 60 bis 75 phr BR. Mit einer derartigen Kautschukmischung werden besonders gute Eigenschaften hinsichtlich der Anforderungen in der Seitenwand (Zielkonflikt aus Abrieb, Rollwiderstand und Reißeigenschaften) erzielt.

Bei dem natürlichen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Bei Naturkautschuk (NR) handelt es sich um ein solches cis-1,4 Polyisopren, der cis-1,4-Anteil im Naturkautschuk ist größer 99 Gew.-%.
Ferner ist auch ein Gemisch eines oder mehrerer natürlicher Polyisoprene mit einem oder mehreren synthetischen Polyisopren(en) denkbar.

Bei dem Butadien-Kautschuk (= BR, Polybutadien) kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.
Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Erfindungsgemäß enthält die Kautschukmischung 15 bis 55 phr wenigstens eines Füllstoffs.
Zu den Füllstoffen zählen im Rahmen der vorliegenden Erfindung Ruß, Kieselsäure, sowie weitere bekannte polare und/oder unpolare Füllstoffe, wie Alumosilicate, Kaolin, Kreide, Stärke, Magnesiumoxid, Titandioxid oder Kautschukgele,
und ferner Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler" sowie Fasern (wie zum Beispiel Aramidfasern, Glasfasern, Carbonfasern, Cellulosefasern).
Zinkoxid gehört im Rahmen der vorliegenden Erfindung nicht zu den Füllstoffen. Die Begriffe "Kieselsäure" und "Silika" werden im Rahmen der vorliegenden Erfindung, wie auch in der Fachwelt üblich, synonym verwendet.

Bevorzugt enthält die erfindungsgemäße Kautschukmischung 15 bis 55 phr wenigstens eines Rußes.
Im Rahmen der vorliegenden Erfindung sind alle dem Fachmann bekannten Ruß-Typen denkbar. Bevorzugt wird jedoch ein Ruß eingesetzt, der eine Jodadsorptionszahl gemäß ASTM D 1510 von 20 bis 180 g/kg, bevorzugt 30 bis 130 kg/g, und eine DBP-Zahl gemäß ASTM D 2414 von 30 bis 200 ml/100 g, bevorzugt 90 bis 180 ml/100g, besonders bevorzugt 90 bis 150 ml/100g, aufweist.
Hiermit werden für die Anwendung im Fahrzeugreifen, insbesondere in der Seitenwand, besonders gute Rollwiderstandsindikatoren (Rückprallelastizität bei 70 °C) und Reißeigenschaften erzielt.

Gemäß einer bevorzugten Ausführungsform der Erfindung enthält die Kautschukmischung 15 bis 55 phr wenigstens eines Rußes und keinen weiteren Füllstoff und somit 0 phr weitere Füllstoffe.

Gemäß einer weiteren bevorzugten Ausführungsform der Erfindung enthält die Kautschukmischung 15 bis 54,9 phr wenigstens eines Rußes und wenigstens einen weiteren Füllstoff, insbesondere Kieselsäure, in Mengen von 0,1 bis 10 phr, bevorzugt 0,1 bis 2 phr, wobei die Gesamtmenge an Füllstoffen 55 phr nicht überschreitet. Bei einer Menge von mehr als 55 phr Füllstoff(en) wird der mit der Erfindung überraschend erzielte Vorteil im Zielkonflikt aus Rollwiderstand und Reißeigenschaften verringert.
Bei einer Menge von > 10 phr Kieselsäure werden die Anforderungen im Hinblick auf die zu lösende Aufgabe, nämlich einer Verbesserung im Zielkonflikt aus Rollwiderstand und Reißeigenschaften, nicht optimal erfüllt. Insbesondere bei der Anwendung der Kautschukmischung in der Seitenwand oder dem Laufstreifen oder dem Hornprofil von Fahrzeugreifen ist zudem mit einer Menge von > 10 phr Kieselsäure keine ausreichende elektrische Leitfähigkeit gewährleistet.

Bei den Kieselsäuren kann es sich um die dem Fachmann bekannten Kieselsäuren, die als Füllstoff für Reifenkautschukmischungen geeignet sind, handeln.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Hierbei können ein oder mehrere verschiedene Silan-Kupplungsagenzien in Kombination miteinander eingesetzt werden.
Weiterhin kann die Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Die genannten Silane und Aktivatoren werden bei der Herstellung der Kautschukmischung bevorzugt in wenigstens einer Grundmischstufe zugegeben.

Erfindungsgemäß enthält die Kautschukmischung wenigstens ein Kohlenwasserstoffharz, welches zu 25 bis 100 Gew.-% aus aromatischen Monomeren aufgebaut ist, und einen Erweichungspunkt gemäß ASTM E 28 (Ring und Ball) von 70 bis 130 °C aufweist.

Die erfindungsgemäße Kautschukmischung enthält bevorzugt 5 bis 20 phr, besonders bevorzugt 10 bis 20 phr, ganz besonders bevorzugt 13 bis 20 phr, des wenigstens einen Kohlenwasserstoffharzes. Überraschenderweise zeigt sich mit derartigen Mengen an Kohlenwasserstoffharz in Kombination mit den weiteren erfindungsgemäßen Bestandteilen eine Verbesserung im Zielkonflikt aus Rollwiderstand und Reißeigenschaften bei gleichen sonstigen Eigenschaften, wie z.B. der Härte.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist. Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können. Das Kohlenwasserstoffharz kann ein Homopolymer und/oder ein Copolymer sein. Unter Homopolymer wird in der vorliegenden Anmeldung ein Polymer verstanden, welches gemäß Römpp Online Version 3.28 "aus Monomeren nur einer Art entstanden ist".
Unter Copolymer wird im Rahmen der vorliegenden Erfindung ein Polymer verstanden, welches aus mehreren, d.h. zwei oder mehr, verschiedenen Monomeren aufgebaut ist. Im Rahmen der vorliegenden Erfindung kann das Kohlenwasserstoffharz daher z.B. auch ein Copolymer aus drei verschiedenen Monomeren sein.

Der Einfachheit halber wird im Rahmen der vorliegenden Erfindung das Kohlenwasserstoffharz, welches zu 25 bis 100 Gew.-% (Gewichtsprozent bezogen auf die Gesamtmasse des Kohlenwasserstoffharzes) aus aromatischen Monomeren aufgebaut ist, als Kohlenwasserstoffharz bezeichnet.

Gemäß einer bevorzugten Ausführungsform der Erfindung ist das Kohlenwasserstoffharz zu 51 bis 100 Gew.-%, also überwiegend, aus aromatischen Monomeren aufgebaut. Besonders bevorzugt ist das überwiegend aromatische Kohlenwasserstoffharz zu 60 bis 100 Gew.-%, besonders bevorzugt zu 70 bis 100 Gew.-%, ganz besonders bevorzugt zu 80 bis 100 Gew.-%, wiederum ganz besonders bevorzugt zu 90 bis 100 Gew.-%, aus aromatischen Monomeren aufgebaut. Hiermit ergibt sich eine besonders gute Verbesserung der Kautschukmischung hinsichtlich des Zielkonfliktes aus Rollwiderstand und Reißeigenschaften, wobei insbesondere die Weiterreißbeständigkeit verbessert ist.

Gemäß einer besonders bevorzugten Ausführungsform der Erfindung ist das Kohlenwasserstoffharz zu 100 Gew.-% aus aromatischen Monomeren aufgebaut und ist damit ein aromatisches Kohlenwasserstoffharz. Hiermit ergibt sich eine besonders gute Verbesserung der Kautschukmischung hinsichtlich des Zielkonfliktes aus Rollwiderstand und Reißeigenschaften, wobei insbesondere die Weiterreißbeständigkeit verbessert ist.
In den bevorzugten Ausführungsformen der Erfindung, in denen das Kohlenwasserstoffharz zu 51 bis 100 Gew.-% aus aromatischen Monomeren aufgebaut ist, wird dieses der Einfachheit halber
als "überwiegend aromatisches Kohlenwasserstoffharz" bezeichnet, da mehr als die Hälfte des Gewichtes aus aromatischen Bestandteilen (Monomeren) besteht. Bei den Kohlenwasserstoffharzen und den überwiegend aromatischen Kohlenwasserstoffharzen sind somit Kohlenwasserstoffharze, die Copolymere aus aromatischen und nicht-aromatischen (aliphatischen) Monomeren sind, in der erfindungsgemäßen Kautschukmischung eingeschlossen.
Gemäß den Ausführungsformen, in denen das Kohlenwasserstoffharz zu weniger als 100 Gew.-%, also 25 bis 99,9999 Gew.-%, aus aromatischen Monomeren aufgebaut ist, enthält das Kohlenwasserstoffharz nicht-aromatische, also aliphatische, Monomere. Bei den aliphatischen Monomeren kann es sich um Monomere der C₅-Erdölfraktion, z.B. Isopren, und/oder Monomere der Terpene und/oder Cycloolefine und/oder Olefine, wie z.B. Penten, handeln. Unter C₅ ist zu verstehen, dass diese Monomere aus fünf Kohlenstoffatomen aufgebaut sind. Ferner kann die C₅-Erdölfraktion Monomere (Bausteine) mit vier, also C₄-Monomere, oder sechs Kohlenstoffatomen, C₆-Monomere, enthalten.
Gemäß Römpp Online Lexikon, Version 3.36 ist "aliphatische Verbindungen" eine "Sammelbezeichnung [...] für funktionalisierte
oder unfunktionalisierte organische Verbindungen, die kein aromatisches Ringsystem enthalten."
Zu den Terpenen gehören im Rahmen der vorliegenden Erfindung gemäß Römpp Online 2015 "... die Terpen-Kohlenwasserstoffe C₁₀H₁₆ und deren Hydrierungs- und Dehydrierungsderivate, aber auch die davon abgeleiteten Alkohole (Terpen-Alkohole), Ketone, Aldehyde und Ester...". Zu den Terpenen zählen beispielsweise Limonen, Alpha-Pinen, Beta-Pinen, Geraniol, Terpineol und Myrcene.

Bei den Monomeren der Terpene kann es sich um mono- und/oder bizyklische Terpene handeln.
In bevorzugten Ausführungsformen der Erfindung, in denen das Kohlenwasserstoffharz zu 100 Gew.-% aus aromatischen Monomeren aufgebaut ist, wird dieses der Einfachheit halber als "aromatisches Kohlenwasserstoffharz" bezeichnet.

Die aromatischen Monomere sämtlicher Ausführungsformen der Erfindung sind ausgewählt aus der Gruppe enthaltend alpha-Methylstyrol und/oder Styrol und/oder Vinyltoluol und/oder *tert*-Butylstyrol und/oder Inden und/oder Cumaron und/oder Methylinden und/oder Methylcumaron und/oder Phenol.
Die aromatischen Monomere sämtlicher Ausführungsformen der Erfindung sind bevorzugt ausgewählt aus der Gruppe bestehend aus alpha-Methylstyrol und/oder Styrol und/oder Vinyltoluol und/oder *tert*-Butylstyrol und/oder Inden und/oder Cumaron und/oder Methylinden und/oder Methylcumaron und/oder Phenol.

Besonders bevorzugt ist das wenigstens eine Kohlenwasserstoffharz ein Copolymer aufgebaut aus wenigstens einem aromatischen Monomer aus der Gruppe bestehend aus alpha-Methylstyrol und/oder Styrol und/oder Vinyltoluol und/oder *tert*-Butylstyrol und/oder Inden und/oder Cumaron und/oder Methylinden und/oder Methylcumaron und/oder Phenol.

Bei dem Vinyltoluol (auch ar-Methylstyrol) kann es sich um p-Vinyltoluol und/oder m-Vinyltoluol und/oder o-Vinyltoluol handeln.
Bei dem *tert*-Butylstyrol kann es sich um p-*tert*-Butylstyrol und/oder m-*tert*-Butylstyrol handeln.

Gemäß einer bevorzugten Ausführungsform der Erfindung ist das Kohlenwasserstoffharz wenigstens aus alpha-Methylstyrol und/oder Styrol, wobei es zu 25 bis 100 Gew.-%, bevorzugt 51 bis 100 Gew.-%, aus alpha-Methylstyrol und/oder Styrol aufgebaut ist. Hierbei ist es z.B. denkbar, dass aliphatische Monomere zu 0 bis 70 Gew.%, bevorzugt 0 bis 49 Gew.-%, bspw. 5 Gew.-%, enthalten sind, wodurch sich ausgehend von 100 Gew.-% entsprechend der Anteil an aromatischen Monomeren verringert.

Ganz besonders bevorzugt ist das aromatische Kohlenwasserstoffharz aus alpha-Methylstyrol und Styrol aufgebaut und ist damit ein Copolymer aus alpha-Methylstyrol und Styrol, wobei es zu 100 Gew.-% aus alpha-Methylstyrol und Styrol aufgebaut ist. Hiermit ergeben sich eine besonders gute Verbesserung der Kautschukmischung hinsichtlich des Zielkonfliktes aus Rollwiderstand und Reißeigenschaften.

Gemäß einer weiteren bevorzugten Ausführungsform der Erfindung ist das Kohlenwasserstoffharz wenigstens aus Inden und Cumaron aufgebaut und ist damit ein Copolymer aus Inden und Cumaron, wobei es zu 25 bis 100 Gew.-%, bevorzugt 51 bis 100 Gew.-%, besonders bevorzugt 70 bis 100 Gew.-%, aus Inden und Cumaron aufgebaut ist. Hierbei ist es z.B. denkbar, dass weitere aromatische und/oder aliphatische Monomere zu 0 bis 70 Gew.%, bevorzugt 0 bis 49 Gew.-%, bspw. 5 Gew.-%, enthalten sind, wodurch sich ausgehend von 100 Gew.-% entsprechend der Anteil an Inden und Cumaron verringert.
Hiermit ergeben sich eine besonders gute Verbesserung der Kautschukmischung hinsichtlich des Zielkonfliktes aus Rollwiderstand und Reißeigenschaften, wie insbesondere eine Verbesserung der Weiterreißbeständigkeit.

Gemäß einer weiteren bevorzugten Ausführungsform der Erfindung ist das Kohlenwasserstoffharz aus wenigstens einem Terpen und zu 25 bis 80 Gew.-%, bevorzugt 25 bis 50 Gew.-%, besonders bevorzugt 31 bis 50 Gew.-%, aus aromatischen Monomeren aufgebaut. Hiermit ergibt sich eine besonders gute Verbesserung der Kautschukmischung hinsichtlich des Zielkonfliktes aus Rollwiderstand und Reißeigenschaften.

Das in der erfindungsgemäßen Kautschukmischung enthaltene Kohlenwasserstoffharz, weist einen Erweichungspunkt gemäß ASTM E 28 (Ring und Ball) von 70 bis 130 °C auf.
Gemäß einer bevorzugten Ausführungsform der Erfindung ist ein Erweichungspunkt gemäß ASTM E 28 (Ring und Ball) von 70 bis 100 °C, insbesondere 80 bis 95 °C, bevorzugt. Ein derartiges Kohlenwasserstoffharz ist z.B. unter dem Handelsnamen SYLVATRAXX® 4401 der Firma Arizona Chemical Company erhältlich oder ein Inden-Cumaron-Harz mit einem Erweichungspunkt von z.B. 85 bis 95 °C, bevorzugt 88 bis 92 °C, z.B. Novares C90 von der Rütgers Novares GmbH.
Gemäß einer weiteren bevorzugten Ausführungsform der Erfindung ist ein Erweichungspunkt gemäß ASTM E 28 (Ring und Ball) von 100 bis 130 °C, insbesondere 110 bis 130 °C, bevorzugt.

Weiterhin weist das in der erfindungsgemäßen Kautschukmischung enthaltene Kohlenwasserstoffharz bevorzugt ein Molekulargewicht Mw (Gewichtsmittel) von 500 bis 5000 g/mol, besonders bevorzugt 500 bis 3000 g/mol, ganz besonders bevorzugt 500 bis 2500 g/mol, wiederum besonders bevorzugt 800 bis 2500 g/mol, wiederum ganz besonders bevorzugt 800 bis 2000 g/mol, auf. Ein derartiges Kohlenwasserstoffharz mit einem Molekulargewicht Mw von 1300 g/mol ist z.B. unter dem Handelsnamen SYLVATRAXX® 4401 der Firma Arizona Chemical Company erhältlich. Ein weiteres derartiges Kohlenwasserstoffharz mit einem Molekulargewicht Mw von 1100 g/mol ist z.B. unter dem Handelsnamen Novares C90 der Firma Rütgers Novares GmbH erhältlich.
Die Bestimmung des Molekulargewichtes (Gewichtsmittel Mw und Zentrifugenmittelwert Mz) erfolgt mittels Gelpermeationschromatographie gemäß DIN 55672-1 (GPC mit Tetrahydofuran als Elutionsmittel, Polystyrol-Standard; Größenausschlußchromatographie; engl. SEC = size exclusion chromatography).

Erfindungsgemäß enthält die Kautschukmischung außer wenigstens einem beschriebenen Kohlenwasserstoffharz keinen weiteren Weichmacher, d.h. 0 phr weitere Weichmacher, d.h. sie ist frei von weiteren Weichmachern. Erfindungsgemäß ersetzt das wenigstens eine oben beschriebene Kohlenwasserstoffharz mit einem Erweichungspunkt von 70 bis 130 °C somit Weichmacher wie Öle, in der Kautschukmischung, wobei sich überraschenderweise eine Verbesserung im Zielkonflikt aus Rollwiderstand und Reißeigenschaften ergibt. Hierdurch ergeben sich zudem Vorteile bei der Verarbeitung der Kautschukmischung, insbesondere bei der Dosierung, da im Vergleich zum Stand der Technik nicht Öl und Harz zu dosiert werden müssen.

Unter "Weichmacher" werden im Rahmen der vorliegenden Erfindung alle dem Fachmann bekannten Weichmacher verstanden, wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Faktisse oder Weichmacherharze, die nicht zu den unten genannten Klebharzen zählen, oder Flüssig-Polymere, deren mittleres Molekulargewicht (Bestimmung per GPC = gel permeation chromatography, in Anlehnung an BS ISO 11344:2004) zwischen 500 und 20000 g/mol liegt.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinckomplexe wie z.B. Zinkethylhexanoat,
c) Wachse,
d) Mastikationshilfsmittel, wie z. B. 2,2'-Dibenzamidodiphenyldisulfid (DBD) und
e) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.
Im Gesamtmengenanteil der weiteren Zusatzstoffe finden sich noch 0,1 bis 10 phr, bevorzugt 1 bis 8 phr, besonders bevorzugt 1,5 bis 4 phr, Zinkoxid (ZnO). Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.
Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.

Die Kautschukmischung kann auch Haftsysteme wie z.B. Cobalt-Salze und Verstärkerhärze (z.b. Resorcin-HMMM/HMT) zum Einsatz in Body-Mischungen, insbesondere Gummierungsmischungen, enthalten.

Die Vulkanisation der erfindungsgemäßen schwefelvernetzbaren Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B. DipDis (Bis-(Diisopropyl)thiophosphoryldisulfid) und/oder Bis(O,O-2-ethylhexyl-thiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen
Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel A):

A) G[CₐH₂ₐ-CH₂-S_{b}Y]_{c}

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5.
Die kautschukaktive Gruppe ist bevorzugt ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe).
Hiermit werden sehr gute Abrieb- und Reißeigenschaften der erfindungsgemäßen Kautschukmischung erzielt.
Im Rahmen der vorliegenden Erfindung werden Schwefel und Schwefelspender, inklusive schwefelspendende Silane wie TESPT, und Vulkanisationsbeschleuniger wie oben beschrieben und Vulkanisationsmittel, die mit einer Funktionalität größer vier vernetzen, wie in der WO 2010/049216 A2 beschrieben, wie z.B. ein Vulkanisationsmittel der Formel A), sowie die oben genannten Systeme Vulkuren®, Duralink® und Perkalink® begrifflich als Vulkanisationsmittel zusammengefasst.

Der erfindungsgemäßen Kautschukmischung werden bei deren Herstellung bevorzugt wenigstens ein Vulkanisationsmittel ausgewählt aus der Gruppe enthaltend, besonders bevorzugt bestehend aus, Schwefel und/oder Schwefelspender und/oder Vulkanisationsbeschleuniger und/oder Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung, insbesondere für die Anwendung im Fahrzeugreifen, herstellen.

Besonders bevorzugt ist die Verwendung der Beschleuniger TBBS und/oder CBS und/oder Diphenylguanidin (DPG).

Außerdem können in der Kautschukmischung Vulkanisationsverzögerer vorhanden sein.

Die Begriffe "vulkanisiert" und "vernetzt" werden im Rahmen der vorliegenden Erfindung synonym verwendet.

Gemäß einer bevorzugten Weiterbildung der Erfindung werden bei der Herstellung der schwefelvernetzbaren Kautschukmischung mehrere Beschleuniger in der Fertigmischstufe zugegeben.
Die Herstellung der erfindungsgemäßen schwefelvernetzbaren Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang oder Kalandrieren weiterverarbeitet und in die entsprechende Form gebracht.

Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, insbesondere der Seitenwand und ggf. in wenigstens einem inneren Bauteil oder dem Laufstreifen, wobei bei zweigeteilten Laufstreifen (oberer Teil: Cap und unterer Teil: Base) die erfindungsgemäße Kautschukmischung sowohl für die Cap als auch für die Base verwendet werden kann.
Als Body-Mischung werden hierbei die Kautschukmischungen für die Bauteile eines Reifen bezeichnet, die nicht Teil des Laufstreifens sind, und zwar insbesondere neben der Seitenwand Reifenbauteile wie Squeegee, Innenseele (Innenschicht), Kernprofil, Gürtel, Schulter, Gürtelprofil, Karkasse, Wulstverstärker, Wulstprofil, Hornprofil und Bandage.

Zur Verwendung in Fahrzeugreifen wird die Mischung als Fertigmischung vor der Vulkanisation bevorzugt in die Form einer Seitenwand gebracht und bei der Herstellung des Fahrzeugreifenrohlings wie bekannt aufgebracht.

Die Herstellung der erfindungsgemäßen Kautschukmischung zur Verwendung als Laufstreifen oder Body- Mischung in Fahrzeugreifen erfolgt wie bereits für die Seitenwand beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Die Erfindung soll nun anhand von Vergleichs- und Ausführungsbeispielen, die in der Tabelle 1 zusammengefasst sind, näher erläutert werden. Die Vergleichsmischungen sind mit V, die erfindungsgemäßen Mischungen sind mit E gekennzeichnet.

Die Mischungsherstellung erfolgte nach dem in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde. Die Fertigmischungen wurden dann durch einen Extrusionsvorgang weiterverarbeitet.

Aus sämtlichen Mischungen wurden Prüfkörper durch Vulkanisation nach 20 Minuten unter Druck bei 160°C hergestellt und mit diesen Prüfkörpern für die Kautschukindustrie typische Materialeigenschaften mit den im Folgenden angegebenen Testverfahren ermittelt.
- Shore-A-Härte bei Raumtemperatur (RT) gemäß DIN ISO 7619-1
- Rückprallelastizität (Rückpr.) bei 70 °C gemäß DIN 53 512
- Maximaler (max) Verlustfaktor tan d (tangens delta, tan d) aus dynamisch-mechanischer Messung bei 55 °C gemäß ISO 4664-1 bzw. DIN 53 513, Dehnungsdurchlauf (engl. "strain sweep")
- Zugfestigkeit und Bruchdehnung bei Raumtemperatur gemäß DIN 53 504
- Ermüdungsrissbeständigkeit als Anzahl der Lastwechsel bis zum Bruch einer hantelförmigen Probe unter einem sich ständig wiederholenden Dehnungszyklus mit einer Frequenz von 104 ± 8 min-1, bestimmt mit einem Monsanto Fatique to Failure Tester (abgekürzt: FTF) bei 101 % Dehnung bei 23 °C; Einheit kC = Kilozyklen
- DeMattia gemäß DIN ISO 132, Angaben der Risslängen (RL) in mm nach 1000, 2000, 4000, 8000, 16000, 32000 und 64000 Zyklen

### Verwendete Substanzen

**Tabelle 1**

| **Bestandteile** | **Einheit** | **V1** | **E1** | **E2** |
|---|---|---|---|---|
| NR^{a)} | phr | 33 | 33 | 33 |
| BR^{b)} | phr | 67 | 67 | 67 |
| Ruß^{c)} | phr | 38 | 38 | 38 |
| Weichmacher^{d)} | phr | 14 | - | - |
| KW-Harz ^{e)} | phr | - | 16 | - |
| KW-Harz ^{f)} | phr | - | - | 16 |
| Zusatzstoffe^{g)} | phr | 17,4 | 17,4 | 17,4 |
| | | | | |

| **Physikalische Eigenschaften** | | | | |
|---|---|---|---|---|
| Härte RT | Shore A | 54 | 54 | 53 |
| Zugfestigkeit | MPa | 11,5 | 11,9 | 14,3 |
| Bruchdehnung | % | 516 | 517 | 669 |
| Rückpr. 70 °C | % | 74,5 | 74,7 | 70,6 |
| tan d | - | 0,059 | 0,057 | 0,079 |
| FTF | kC | 210 | 267 | 164 |
| RL 1000 | mm | 6,4 | 2,2 | 2,1 |
| RL 2000 | mm | 10,8 | 4,5 | 2,3 |
| RL 4000 | mm | 22,9 | 8,8 | 3,0 |
| RL 8000 | mm | 25,0 | 19,5 | 5,9 |
| RL 16000 | mm | - | 25,0 | 11,9 |
| RL 32000 | mm | - | - | 19,5 |
| RL 64000 | mm | - | - | 25,0 |

| | | | | |
|---|---|---|---|---|
| ^{a)} NR: Naturkautschuk TSR ^{b)} Butadien-Kautschuk, hoch-cis Co-BR, Mw = 550000 g/mol, cis-Gehalt >= 95 % ^{c)} Ruß N550 ^{d)} Weichmacher: RAE ^{e)} Kohlenwasserstoffharz: SYLVATRAXX® 4401 der Firma Arizona Chemical Company ^{f)} Kohlenwasserstoffharz: Novares C 90 der Rütgers Novares GmbH ^{g)} Zusatzstoffe: inkl. schwefelhaltigem Vulkanisationssystem | | | | |

Wie Tabelle 1 zu entnehmen ist, wird mit der erfindungsgemäßen Kautschukmischung E1, die erfindungsgemäß ein Kohlenwasserstoffharz gemäß Anspruch 1 anstelle eines Weichmachers enthält, bei gleicher Härte und gleichen statischen Eigenschaften (Zugfestigkeit, Bruchdehnung) eine überraschend bessere dynamische, strukturelle Haltbarkeit erzielt. Dies ist zum Einen an der größeren Zyklenzahl im FTF-Ermüdungstest zu erkennen und zum Anderen an den geringeren Risslängen des Weiterreißtests (DeMattia wie oben beschrieben). Gleichzeitig ist der Rollwiderstand überraschenderweise auf gleichem oder sogar leicht verbessertem Niveau. Wie Tabelle 1 ferner zu entnehmen ist, wird mit der erfindungsgemäßen Kautschukmischung E2, die ein Beispiel für eine Ausführungsform mit Inden-Cumaron-Harz ist, eine deutlich verbesserte Weiterreißbeständigkeit erzielt, wobei erst nach 64000 Zyklen eine Risslänge von 25 mm erreicht wird. Hierbei wird der Rollwiderstand nicht im gleichen Maße signifikant negativ beeinträchtigt, sodass auch hier eine Verbesserung im Zielkonflikt aus Rollwiderstand und Reißeigenschaften, insbesondere Weiterreißbeständigkeit erzielt wird. Ein Fahrzeugreifen, der die erfindungsgemäße Kautschukmischung wenigstens in der Seitenwand enthält, zeigt eine verbesserte strukturelle Haltbarkeit, insbesondere nach dauerhafter Belastung, bei gleichem oder verbessertem Rollwiderstand.

## Patentansprüche

1. Schwefelvernetzbare Kautschukmischung enthaltend
- 10 bis 40 phr natürliches Polyisopren (NR) und 60 bis 90 phr Polybutadien (BR) und
- 15 bis 55 phr wenigstens eines Füllstoffs und
- wenigstens ein Kohlenwasserstoffharz, welches zu 25 bis 100 Gew.-% aus aromatischen Monomeren aufgebaut ist, und einen Erweichungspunkt gemäß ASTM E 28 (Ring und Ball) von 70 bis 130 °C aufweist, und
- 0 phr weitere Weichmacher, d.h. die schwefelvernetzbare Kautschukmischung ist frei von weiteren Weichmachern.

2. Kautschukmischung nach Anspruch 1, **dadurch gekennzeichnet, dass** sie 5 bis 20 phr des wenigstens einen Kohlenwasserstoffharzes enthält.

3. Kautschukmischung nach einem der Ansprüche 1 oder 2, **dadurch gekennzeichnet, dass** sie 15 bis 55 phr wenigstens eines Rußes als Füllstoff enthält.

4. Kautschukmischung nach zumindest einem der vorhergehenden Ansprüche, **dadurch gekennzeichnet, dass** das Kohlenwasserstoffharz zu 90 bis 100 Gew.-% aus aromatischen Monomeren aufgebaut ist.

5. Kautschukmischung nach zumindest einem der vorhergehenden Ansprüche, **dadurch gekennzeichnet, dass** das Kohlenwasserstoffharz aus wenigstens einem aromatischen Monomer aus der Gruppe enthaltend alpha-Methylstyrol und/oder Styrol und/oder Vinyltoluol und/oder *tert*-Butylstyrol und/oder Inden und/oder Cumaron und/oder Methylinden und/oder Methylcumaron und/oder Phenol aufgebaut ist.

6. Kautschukmischung nach Anspruch 5, **dadurch gekennzeichnet, dass** das Kohlenwasserstoffharz aus alpha-Methylstyrol und Styrol aufgebaut ist.

7. Kautschukmischung nach einem der Ansprüche 1 bis 3, **dadurch gekennzeichnet, dass** das Kohlenwasserstoffharz zu 25 bis 80 Gew.-% aus aromatischen Monomeren aufgebaut ist

8. Fahrzeugreifen, der wenigstens in der Seitenwand wenigstens ein Vulkanisat wenigstens einer schwefelvernetzbaren Kautschukmischung nach zumindest einem der Ansprüche 1 bis 7 aufweist.

## Claims

1. Sulfur-crosslinkable rubber mixture containing
- 10 to 40 phr of natural polyisoprene (NR) and 60 to 90 phr of polybutadiene (BR) and
- 15 to 55 phr of at least one filler and
- at least one hydrocarbon resin constructed to an extent of 25% to 100% by weight from aromatic monomers and having a softening point according to ASTM E 28 (ring and ball) of 70°C to 130°C and
- 0 phr of further plasticizers, i.e. the sulfur-crosslinkable rubber mixture is free from further plasticizers.

2. Rubber mixture according to Claim 1, **characterized in that** it contains 5 to 20 phr of the at least one hydrocarbon resin.

3. Rubber mixture according to either of Claims 1 and 2, **characterized in that** it contains 15 to 55 phr of at least one carbon black as filler.

4. Rubber mixture according to at least one of the preceding claims, **characterized in that** the hydrocarbon resin is constructed to an extent of 90% to 100% by weight from aromatic monomers.

5. Rubber mixture according to at least one of the preceding claims, **characterized in that** the hydrocarbon resin is constructed from at least one aromatic monomer from the group containing alpha-methylstyrene and/or styrene and/or vinyltoluene and/or tert-butylstyrene and/or indene and/or coumarone and/or methylindene and/or methylcoumarone and/or phenol.

6. Rubber mixture according to Claim 5, **characterized in that** the hydrocarbon resin is constructed from alpha-methylstyrene and styrene.

7. Rubber mixture according to any of Claims 1 to 3, **characterized in that** the hydrocarbon resin is constructed to an extent of 25% to 80% by weight from aromatic monomers.

8. Vehicle tire comprising at least in the sidewall at least one vulcanizate of at least one sulfur-crosslinkable rubber mixture according to at least one of Claims 1 to 7.

## Revendications

1. Mélange de caoutchouc vulcanisable au soufre contenant
- 10 à 40 phr de polyisoprène naturel (NR) et 60 à 90 phr de polybutadiène (BR) et
- 15 à 55 phr d'au moins une charge et
- au moins une résine d'hydrocarbure qui est construite à partir de 25 à 100 % en poids de monomères aromatiques, et présente un point de ramollissement selon la norme ASTM E 28 (anneau et bille) de 70 à 130 °C, et
- 0 phr d'autres plastifiants, c'est-à-dire que le mélange de caoutchouc vulcanisable au soufre est exempt d'autres plastifiants.

2. Mélange de caoutchouc selon la revendication 1, **caractérisé en ce qu'**il contient 5 à 20 phr de l'au moins une résine d'hydrocarbure.

3. Mélange de caoutchouc selon l'une quelconque des revendications 1 et 2, **caractérisé en ce qu'**il contient 15 à 55 phr d'au moins une suie en tant que charge.

4. Mélange de caoutchouc selon au moins l'une des revendications précédentes, **caractérisé en ce que** la résine d'hydrocarbure est construite à partir de 90 à 100 % en poids de monomères aromatiques.

5. Mélange de caoutchouc selon au moins l'une des revendications précédentes, **caractérisé en ce que** la résine d'hydrocarbure est construite à partir d'au moins un monomère aromatique choisi dans le groupe contenant l'alpha-méthylstyrène et/ou le styrène et/ou le vinyltoluène et/ou le *tert*-butyl-styrène et/ou l'indène et/ou la coumarone et/ou le méthylindène et/ou la méthylcoumarone et/ou le phénol.

6. Mélange de caoutchouc selon la revendication 5, **caractérisé en ce que** la résine d'hydrocarbure est construite à partir d'alpha-méthylstyrène et de styrène.

7. Mélange de caoutchouc selon l'une quelconque des revendications 1 à 3, **caractérisé en ce que** la résine d'hydrocarbure est construite à partir de 25 à 80 % en poids de monomères aromatiques.

8. Pneu de véhicule, qui présente au moins dans la paroi latérale au moins un vulcanisat d'au moins un mélange de caoutchouc vulcanisable au soufre selon au moins l'une des revendications 1 à 7.
